# EUROPEAN PATENT APPLICATION

(11) **EP 4 737 118 A1**
(43) Date of publication of application: **06.05.2026**
(21) Application number: 23943405.3
(22) Date of filing: 11.12.2023
(51) Int. Cl.: B32B 27/30, B32B 27/36, B32B 27/40, C08L 33/00, C08L 67/00, C08L 75/00, C08K 7/00, C08K 3/24, C08K 7/14

(54) **FLEXIBLE COMPOSITE MATERIAL AND PREPARATION METHOD AND APPLICATION THEREOF**

(30) Priority: 29.06.2023 CN 202310778172
(71) Applicant: Cangzhou Newmat Aadvanced Materials Technology Co., Ltd, Cangzhou, Hebei 061001 (CN); Newmat (Beijing) Environmental Materials Technology Co., Ltd, Beijing 101309 (CN)
(72) Inventor: JING, Liang, Beijing 101309 (CN); GAO, Keqiang, Beijing 101309 (CN); ZHANG, Jiansen, Beijing 101309 (CN); DONG, Qihui, Beijing 101309 (CN); ZHANG, Guibin, Beijing 101309 (CN); SHAO, Bo, Beijing 101309 (CN); ZHANG, Xiaochen, Beijing 101309 (CN)
(74) Representative: Moré, Solveig Helga
(86) International application number: PCT/CN2023/137744
(87) International publication number: WO 2025/000930

(57) **Abstract**

The present invention provides a flexible composite material, and a preparation method and an application thereof, belonging to the technical field of functional materials. The flexible composite material provided by the present invention comprises a fiber cloth and a strontium titanate nano-micro material compounded in the fiber cloth; the raw materials for preparing the strontium titanate nano-micro material comprise a matrix material and a dispersant, the mass of the dispersant is 0.05-0.2% of the mass of the matrix material; the matrix material comprises the following raw materials in mass fractions: 50-90 parts of a powdered resin; 10-50 parts of a curing agent; 0-20 parts of an antioxidant additive; 0.05-0.2 parts of a catalyst; 0-10 parts of a surface adjuster, 0-20 parts of a light stabilizer; 0.05-5 parts of a strontium titanate nano-additive, and the strontium titanate nano-additive is a compound of octahedral strontium titanate, hexahedral strontium titanate and irregular strontium titanate in a specific ratio. The flexible composite material provided by the present invention has excellent weather resistance.

## Description

The present application claims priority to Chinese Patent Application No. CN 202310778172.0, entitled "FLEXIBLE COMPOSITE MATERIAL, AND PREPARATION METHOD AND USE THEREOF" filed with the China National Intellectual Property Administration (CNIPA) on June 29, 2023, which is incorporated herein by reference in its entirety.

### TECHNICAL FIELD

The present disclosure relates to the technical field of functional materials, in particular to a flexible composite material, and a preparation method and use thereof.

### BACKGROUND

Conventional photovoltaic modules, consisting of a TPT backsheet, an EVA film, solar cells, a glass panel, frames, etc., are rigid components that are not prone to deformation and are relatively heavy, being unsuitable for scenarios where bending or a light weight is required. Flexible solar panels are a product of emerging technologies in the solar industry in the world, specifically characterized by the replacement of the glass panels, or even the TPT backsheets, in the conventional photovoltaic modules with flexible composite materials to achieve the protection and supporting of the solar cells. The flexible solar panels are flexible and bendy, and could be bent at will to conform to a shape of a roof, provided that an average roof slope is less than 60° and a bending radius of panels is greater than 13 m. Moreover, the flexible solar panels have a light weight, thereby avoiding both an excessive load on the roof and great changes in a main structure of the roof due to laying of the flexible solar panels. However, weather resistance of the flexible composite materials in the prior art needs to be further improved.

### SUMMARY

The present disclosure is intended to provide a flexible composite material, and a preparation method and use thereof. The flexible composite material provided by the present disclosure has excellent weather resistance.

To achieve the above objects, the present disclosure provides the following technical solutions.

The present disclosure provides a flexible composite material, including a fiber cloth and a strontium titanate nano-micro material composited into the fiber cloth, where
raw materials for preparing the strontium titanate nano-micro material include a matrix material and a dispersant;
a mass of the dispersant is 0.05-0.2% of a mass of the matrix material; and
the matrix material is prepared from the following raw materials in parts by mass: 50-90 parts of a powdered resin; 10-50 parts of a curing agent; 0-20 parts of an antioxidant additive; 0.05-0.2 parts of a catalyst; 0-10 parts of a surface conditioner; 0-20 parts of a light stabilizer; and 0.05-5 parts of a strontium titanate nano-additive, where the strontium titanate nano-additive is a mixture of octadecahedral strontium titanate, hexahedral strontium titanate and irregular strontium titanate at a mass ratio of 3-4 : 4-6 : 1-2.

In some embodiments, the fiber cloth is a fiberglass cloth.

In some embodiments, the fiber cloth has a grammage of 100-400 g/m².

In some embodiments, the strontium titanate nano-additive has a particle size of 50-300 nm.

In some embodiments, the octadecahedral strontium titanate has a particle size of 100-200 nm; the hexahedral strontium titanate has a particle size of 100-200 nm; and the irregular strontium titanate has a particle size of 50-100 nm.

In some embodiments, the powdered resin includes at least one selected from the group consisting of an acrylic resin, a polyurethane resin, and a polyester resin.

In some embodiments, the acrylic resin is an epoxy acrylic resin.

In some embodiments, the curing agent includes at least one selected from the group consisting of dodecanedioic acid, triglycidyl isocyanurate, and an isocyanate.

In some embodiments, the antioxidant additive includes at least one selected from the group consisting of stearyl beta-(3,5-di-tert-butyl-4-hydroxyphenyl)propionate, a benzofuranone derivative, and a thioester antioxidant.

In some embodiments, the catalyst includes one selected from the group consisting of tetrabutylammonium bromide, dibutyltin dilaurate, and 2-propylimidazole.

In some embodiments, the surface conditioner includes benzoin.

In some embodiments, the matrix material has a particle size of 30-150 µm.

In some embodiments, the dispersant has a particle size of 2-8 µm.

In some embodiments, the dispersant includes at least one selected from the group consisting of alumina, fumed silica, and glass microbeads.

In some embodiments, a content of the strontium titanate nano-micro material in the flexible composite material is in a range of 50-80 wt%.

The present disclosure provides a method for preparing the flexible composite material described in the aforementioned technical solutions, including the following steps:
impregnating the fiber cloth using the strontium titanate nano-micro material in a molten state, and then curing to obtain the flexible composite material.

In some embodiments, the impregnating the fiber cloth using the strontium titanate nano-micro material in the molten state includes:
laying the strontium titanate nano-micro material on a surface of the fiber cloth, and heating a resulting system by a lamination device or a rolling device such that the strontium titanate nano-micro material is melted and then impregnates the fiber cloth.

In some embodiments, the method for impregnating the fiber cloth using the strontium titanate nano-micro material in the molten state includes the following steps:
extruding the strontium titanate nano-micro material to obtain a resin film, laminating the resin film onto a surface of the fiber cloth, and heating an obtained system by the lamination device or the rolling device such that the resin film is melted and then impregnates the fiber cloth.

In some embodiments, the curing is performed at a temperature of 130-200°C and a pressure of 1-20 MPa for 10-90 minutes.

The present disclosure provides use of the flexible composite material described in the aforementioned technical solutions or the flexible composite material prepared by the method described in the aforementioned technical solutions as an encapsulation material for a photovoltaic module.

In some embodiments, the encapsulation material is an encapsulation material for a front sheet or a backsheet of the photovoltaic module.

### Beneficial effects:

In the flexible composite material provided by the present disclosure, a strontium titanate nano-micro material is composited into a fiber cloth, a strontium titanate nano-additive is added to a matrix material of the strontium titanate nano-micro material, and the strontium titanate nano-additive is obtained by compounding strontium titanate having specific morphologies at a specific ratio, thereby enabling the flexible composite material to have excellent weather resistance. In addition, the flexible composite material provided by the present disclosure also has characteristics of a light weight, a high strength, a high light transmittance and good water resistance.

### DETAILED DESCRIPTION OF THE EMBODIMENTS

The present disclosure provides a flexible composite material, including a fiber cloth and a strontium titanate nano-micro material composited into the fiber cloth, wherein
raw materials for preparing the strontium titanate nano-micro material include a matrix material and a dispersant;
a mass of the dispersant is 0.05-0.2% of a mass of the matrix material; and
the matrix material is prepared from the following raw materials in parts by mass: 50-90 parts of a powdered resin; 10-50 parts of a curing agent; 0-20 parts of an antioxidant additive; 0.05-0.2 parts of a catalyst; 0-10 parts of a surface conditioner; 0-20 parts of a light stabilizer; and 0.05-5 parts of a strontium titanate nano-additive, where the strontium titanate nano-additive is a mixture of octadecahedral strontium titanate, hexahedral strontium titanate and irregular strontium titanate at a mass ratio of 3-4 : 4-6 : 1-2.

The strontium titanate nano-micro material of the present disclosure is a powder coating material used for a photovoltaic module encapsulation material and has excellent weather resistance. A nano-micro material of the present disclosure is classified on the basis of a size of a material (i.e., classified as a nano-scale and micro-scale material) instead of an amount of the strontium titanate nano-additive.

In the present disclosure, unless otherwise specified, the raw materials used are all commercially available products well known to those skilled in the art or are prepared by methods well known to those skilled in the art.

A flexible composite material provided by the present disclosure includes a fiber cloth. In some embodiments of the present disclosure, the fiber cloth is a fiberglass cloth; the fiberglass cloth is a woven fiberglass cloth; and the fiber cloth has a grammage of 100-400 g/m², and specifically 100 g/m², 200 g/m², 300 g/m² or 400 g/m². A thickness of the flexible composite material of the present disclosure is mainly influenced by the grammage of the fiber cloth. Specifically, in some embodiments of the present disclosure, the flexible composite material has the thickness of 0.1-0.4 mm, preferably 0.15-0.31 mm, and specifically 0.15 mm, 0.22 mm or 0.31 mm.

The flexible composite material provided by the present disclosure includes a strontium titanate nano-micro material composited into the fiber cloth, and specifically, the strontium titanate nano-micro material infiltrates fibers in the fiber cloth and is then composited therewith. In some embodiments of the present disclosure, a content of the strontium titanate nano-micro material in the flexible composite material is in a range of 50-80 wt%, preferably 51-78 wt%, more preferably 52-75 wt%, further preferably 53-70 wt%, more further preferably 54-65 wt%, and even further preferably 55-60 wt%.

In the present disclosure, raw materials for preparing the strontium titanate nano-micro material include a matrix material. Raw materials for preparing the matrix material include, in parts by mass, 50-90 parts, preferably 55-80 parts, more preferably 60-78 parts, further preferably 65-75 parts, still more preferably 70-72 parts of a powdered resin. In some embodiments of the present disclosure, the powdered resin includes at least one selected from the group consisting of an acrylic resin, a polyurethane resin, and a polyester resin, and preferably the acrylic resin.

In some embodiments of the present disclosure, the acrylic resin is used as a main material, with advantages of good weather resistance, high film-forming strength, excellent impact resistance and superior flexibility. In some embodiments of the present disclosure, the acrylic resin is an epoxy acrylic resin, and preferably an epoxy acrylic powder coating resin described in patent CN 115651473 A. Specifically, raw materials of the epoxy acrylic powder coating resin include 20-70 parts of a hard monomer, 10-60 parts of a soft monomer, 10-50 parts of a crosslinking monomer, and 0.5-8 parts of an initiator, where the crosslinking monomer includes at least one selected from the group consisting of an epoxy-containing monomer, and a hydroxyl-containing monomer; the hard monomer includes at least one selected from the group consisting of methyl methacrylate, ethyl methacrylate, butyl methacrylate, isobornyl methacrylate, dicyclopentadiene acrylate, dicyclopentadiene ethoxyacrylate, styrene, methylstyrene, and acrylonitrile; the soft monomer includes an alkyl acrylate compound; the epoxy-containing monomer includes at least one selected from the group consisting of glycidyl methacrylate, glycidyl acrylate, hydroxybutyl acrylate glycidyl ether, and glycidyl tertiary carbonate; and the hydroxyl-containing monomer includes at least one selected from the group consisting of hydroxyethyl acrylate, hydroxyethyl methacrylate, hydroxypropyl acrylate, hydroxypropyl methacrylate, beta-hydroxypropyl acrylate, beta-hydroxypropyl methacrylate, and N-methylolacrylamide. A mass ratio of the epoxy-containing monomer to the hydroxyl-containing monomer in the crosslinking monomer is in a range of (2-15) : 1. The epoxy acrylic powder coating resin is prepared by using the following method, which includes: adding, in a dropwise manner, a mixture of the hard monomer, the soft monomer, the crosslinking monomer, the initiator accounting for 40-50% of a formula amount thereof, and an optional molecular weight regulator to a solvent, performing a first reaction, then adding, in a dropwise manner, a remaining initiator, and continuing the first reaction to obtain the epoxy acrylic powder coating resin, where the first reaction is performed at a temperature of 80-110°C for 2-4 hours, and the continuing the first reaction is performed for 2-4.5 hours.

On the basis of the parts by mass of the powdered resin, the raw materials for preparing the matrix material in the present disclosure include 10-50 parts, preferably 15-30 parts, more preferably 18-25 parts, further preferably 20-21 parts of a curing agent. In some embodiments of the present disclosure, the curing agent includes at least one selected from the group consisting of dodecanedioic acid (DDDA), triglycidyl isocyanurate (TGIC), and an isocyanate, and preferably the DDDA, the TGIC or the isocyanate. In some embodiments of the present disclosure, the curing agent of the above-mentioned types is used, which is favorable for improving film-forming efficiency while ensuring basic physical properties of a formed film.

On the basis of the parts by mass of the powdered resin, the raw materials for preparing the matrix material in the present disclosure include 0-20 parts, preferably 0.3-10 parts, more preferably 0.5-5 parts, further preferably 1-2 parts of an antioxidant additive. In some embodiments of the present disclosure, the antioxidant additive includes at least one selected from the group consisting of beta-(3,5-di-tert-butyl-4-hydroxyphenyl)propionic acid octadecyl ester (antioxidant 1076), a benzofuranone derivative, and a thioester, and preferably the antioxidant 1076. In some embodiments of the present disclosure, the antioxidant additive of the above-mentioned types is used, which is favorable for improving weather resistance.

On the basis of the parts by mass of the powdered resin, the raw materials for preparing the matrix material in the present disclosure include 0.05-0.2 parts, preferably 0.06-0.15 parts, more preferably 0.07-0.1 parts, further preferably 0.075-0.085 parts of a catalyst. In some embodiments of the present disclosure, the catalyst includes tetrabutylammonium bromide, dibutyltin dilaurate or 2-propylimidazole, and preferably the tetrabutylammonium bromide. In some embodiments of the present disclosure, the catalyst of the above-mentioned types is used, which is favorable for improving the film-forming efficiency.

On the basis of the parts by mass of the powdered resin, the raw materials for preparing the matrix material in the present disclosure include 0-10 parts, preferably 0.3-5 parts, more preferably 0.5-2 parts, further preferably 0.8-1 part of a surface conditioner. In some embodiments of the present disclosure, the surface conditioner includes benzoin. In some embodiments of the present disclosure, the surface conditioner of the above-mentioned type is used, which is favorable for improving surface smoothness and light transmission of the formed film.

On the basis of the parts by mass of the powdered resin, the raw materials for preparing the matrix material in the present disclosure include 0-20 parts, preferably 0.5-15 parts, more preferably 0.8-10 parts, further preferably 1.2-7 parts, and still further preferably 1.66-3 parts of a light stabilizer. In some embodiments of the present disclosure, the light stabilizer includes a triazine light stabilizer or a hindered amine light stabilizer, and preferably the triazine light stabilizer, where the triazine light stabilizer is 2-[2-hydroxy-4-[3-(2-ethylhexyloxy)-2-hydroxypropoxy]phenyl]-4,6-bis(2,4-dimethylphenyl)-1, 3,5-triazine (light stabilizer UV-405); and the hindered amine light stabilizer is at least one selected from the group consisting of a high-molecular-weight triazine-piperidine condensate (light stabilizer 119), Tinuvin 622 and Tinuvin 770. In some embodiments of the present disclosure, the light stabilizer of the above-mentioned types is used, which is favorable for improving the weather resistance.

On the basis of the parts by mass of the powdered resin, the raw materials for preparing the matrix material in the present disclosure include 0.05-5 parts, preferably 0.1-4.8 parts, more preferably 0.5-4.5 parts, further preferably 1-4 parts, even further preferably 1.5-3.5 parts, still further preferably 2-3.45 parts of a strontium titanate nano-additive. In the present disclosure, the strontium titanate nano-additive is a mixture of octadecahedral strontium titanate, hexahedral strontium titanate and irregular strontium titanate at a mass ratio of 3-4 : 4-6 : 1-2, preferably 3-3.5 : 5-6 : 1-1.5, and more preferably 3 : 6 : 1. In some embodiments of the present disclosure, the strontium titanate nano-additive has a particle size of 50-300 nm, and preferably 50-200 nm. In some embodiments of the present disclosure, the octadecahedral strontium titanate has a particle size of 100-200 nm; the hexahedral strontium titanate has a particle size (side length) of 100-200 nm; and the irregular strontium titanate has a particle size of 50-100 nm. In the present disclosure, the strontium titanate nano-additive is obtained by compounding strontium titanate having specific morphologies at a specific ratio, thereby enabling the strontium titanate nano-micro material to have excellent weather resistance. Moreover, using the strontium titanate having different morphologies in combination could provide different crystal planes, which facilitates efficient separation of photogenerated charges and holes, thereby improving photoelectric conversion efficiency.

In some embodiments of the present disclosure, raw materials for preparing the strontium titanate nano-micro material include a dispersant, and the dispersant includes at least one selected from the group consisting of alumina, fumed silica, and glass microbeads, and preferably the alumina. In the present disclosure, a mass of the dispersant is 0.05-0.2%, and preferably 0.1-0.15%, of a mass of the matrix material. In some embodiments of the present disclosure, the dispersant of the above-mentioned types is used, which is favorable for avoiding agglomeration and improving processing performance of a product.

In some embodiments of the present disclosure, the matrix material has a particle size of 30-150 µm; and the dispersant has a particle size of 2-8 µm, and preferably 2-4 µm.

The present disclosure provides a method for preparing the strontium titanate nano-micro material described in the aforementioned technical solutions, including the following steps:
mixing the raw materials for preparing the matrix material, then sequentially subjecting a resulting mixture to melt extrusion, cooling, crushing and sieving to obtain the matrix material, and mixing the matrix material with the dispersant to obtain the strontium titanate nano-micro material;
alternatively, mixing the raw materials for preparing the matrix material with the dispersant, and then sequentially subjecting an obtained mixture to melt extrusion, cooling, crushing and sieving to obtain the strontium titanate nano-micro material.

In the present disclosure, the strontium titanate nano-micro material can be prepared by different methods on the basis of a timing for adding the dispersant, as will be explained in detail below.

A first method: in the present disclosure, the raw materials for preparing the matrix material are mixed, and a resulting mixture is then sequentially subjected to melt extrusion, cooling, crushing and sieving to obtain the matrix material; and the matrix material is mixed with the dispersant to obtain the strontium titanate nano-micro material. In some embodiments of the present disclosure, a mixing mode of the raw materials for preparing the matrix material is mechanical mixing. Conditions of the mechanical mixing are not particularly limited in the present disclosure, and any condition that could ensure uniform mixing of all the raw materials may be adopted. In some embodiments of the present disclosure, the melt extrusion is performed at a temperature of 90-130°C, and preferably 110-120°C. A cooling mode is not particularly limited in the present disclosure, and any cooling mode that is well known to those skilled in the art may be adopted. In some embodiments of the present disclosure, the crushing includes sequentially performing a first crushing and a second crushing, where materials are crushed to a particle size of 0.2-1 cm by the first crushing; and the materials are crushed to a particle size of 30-150 µm by the second crushing. The sieving is not particularly limited in the present disclosure, and any sieving that could produce a matrix material having a desired particle size may be adopted. In some embodiments of the present disclosure, a mixing mode of the matrix material and the dispersant is mechanical mixing. Conditions of the mechanical mixing are not particularly limited in the present disclosure, and any condition that could ensure uniform mixing of the matrix material and the dispersant may be adopted.

A second method: in the present disclosure, the raw materials for preparing the matrix material and the dispersant are mixed, and an obtained mixture is then sequentially subjected to melt extrusion, cooling, crushing and sieving to obtain the strontium titanate nano-micro material. In some embodiments of the present disclosure, a mixing mode of the raw materials for preparing the matrix material and the dispersant is mechanical mixing. Conditions of the mechanical mixing are not particularly limited in the present disclosure, and any condition that could ensure uniform mixing of all the raw materials may be adopted. In some embodiments of the present disclosure, specific operations of the melt extrusion, the cooling, the crushing and the sieving involved in the second method are the same as specific operations of the melt extrusion, the cooling, the crushing and the sieving involved in the first method, and no more detailed description is to be given here.

The present disclosure provides a method for preparing the flexible composite material described in the aforementioned technical solutions, including the following steps:
impregnating the fiber cloth using the strontium titanate nano-micro material in a molten state, and then curing to obtain the flexible composite material.

In the present disclosure, the fiber cloth could be impregnated using the strontium titanate nano-micro material in a molten state by different methods, as will be explained in detail below.

A first method: the strontium titanate nano-micro material is laid on a surface of the fiber cloth, and a lamination device or a rolling device is used to heat a resulting system such that the strontium titanate nano-micro material is melted and then impregnates the fiber cloth. In some embodiments of the present disclosure, a powder spreading device is used to evenly spread the strontium titanate nano-micro material on the surface of the fiber cloth, the fiber cloth, on the surface of which the strontium titanate nano-micro material is spread, is then loaded into the lamination device, and mold-closing and heating are performed to melt the strontium titanate nano-micro material and then enable the strontium titanate nano-micro material in the molten state to infiltrate the fiber cloth. Alternatively, the fiber cloth, on the surface of which the strontium titanate nano-micro material is spread, is rolled and heated by the rolling device to melt the strontium titanate nano-micro material and then enable the strontium titanate nano-micro material in the molten state to infiltrate the fiber cloth. The rolling device is used in the present disclosure to facilitate continuous production. In some embodiments of the present disclosure, a powder spreading speed of the powder spreading device is 1-10 m/minute, preferably 2-6 m/minute, and further preferably 3-4 m/minute. In some embodiments of the present disclosure, a temperature of the heating is sufficient to ensure melting of the strontium titanate nano-micro material, and specifically, the heating is performed at the temperature of 130-170°C, preferably 130-160°C, and further preferably 130-150°C.

A second method: the strontium titanate nano-micro material is extruded to obtain a resin film, the resin film is laminated onto a surface of the fiber cloth, and then the lamination device or the rolling device is used to heat an obtained system such that the resin film is melted and then impregnates the fiber cloth. In some embodiments of the present disclosure, an extrusion device is used to extrude the strontium titanate nano-micro material to obtain the resin film, the resin film is then laminated onto the surface of the fiber cloth, and then the rolling device is used to roll and heat the fiber cloth on which the resin film is laminated to melt the resin film and then enable the strontium titanate nano-micro material in the molten state to infiltrate the fiber cloth. The rolling device is used in the present disclosure to facilitate continuous production. In some embodiments of the present disclosure, an extrusion speed of the extrusion device is 1-10 m/minute, and preferably 1-6 m/minute. In the present disclosure, a temperature of the heating is sufficient to ensure melting of the resin film, and specifically, the heating is performed at the temperature of 130-170°C, preferably 130-160°C, and further preferably 130-150°C.

After the strontium titanate nano-micro material in the molten state infiltrates the fiber cloth, a resulting material is cured in the present disclosure to obtain a flexible composite material. In some embodiments of the present application, curing is performed at a temperature of 130-200°C, preferably 140-170°C, and further preferably 150-160°C. In some embodiments of the present application, the curing is performed at a pressure of 1-20 MPa, preferably 5-15 MPa, and further preferably 8-10 MPa. In some embodiments of the present application, the curing is performed for 10-90 minutes, preferably 20-60 minutes, and further preferably 30-40 minutes. In some embodiments of the present disclosure, when the lamination device is used to prepare the flexible composite material, cooling and demolding are performed after the curing to obtain the flexible composite material; and when the rolling device is used to prepare the flexible composite material, winding or cutting to a desired size is performed after the curing to obtain the flexible composite material.

The present disclosure further provides use of the flexible composite material described in the aforementioned technical solutions or the flexible composite material prepared by the method described in the aforementioned technical solutions as an encapsulation material for a photovoltaic module. In some embodiments of the present disclosure, the photovoltaic module is a lightweight photovoltaic module. In the present disclosure, the encapsulation material may specifically be used for a front sheet of the photovoltaic module or for a backsheet of the photovoltaic module.

The technical solutions of the present disclosure will be clearly and completely described below with reference to the examples of the present disclosure. Apparently, the described examples are merely a part rather than all of the examples of the present disclosure. All other embodiments obtained by those skilled in the art based on the embodiments of the present disclosure without creative efforts should fall within the protection scope of the present disclosure.

Strontium titanate nano-additives used in examples of the present disclosure are products prepared in Preparation Examples 1-3.

### Preparation Example 1

Preparation of hexahedral strontium titanate nanoparticles was performed by the following steps.

Palmitic acid, ethylene glycol and 1,2-butanediol were mixed with water to obtain a composite morphology modifier, in which, a concentration of the palmitic acid was 0.2 wt%, a concentration of the ethylene glycol was 0.2 wt%, and a concentration of the 1,2-butanediol was 2 wt%. An aqueous titanium tetrachloride solution having a concentration of 0.003 g/mL was added, in a dropwise manner, to the composite morphology modifier, where a volume ratio of the composite morphology modifier to the aqueous titanium tetrachloride solution was 1 : 2. A resulting mixture was stirred for 30 minutes, and ice water was used for cooling during stirring to obtain a mixed solution I.

The mixed solution I, an aqueous lithium hydroxide solution having a concentration of 0.033 g/mL and an aqueous strontium hydroxide solution having a concentration of 0.01 g/mL were mixed at a volume ratio of 3 : 3 : 1. A resulting system was stirred for 15 minutes to obtain a mixed solution II having a pH of 13.8.

The mixed solution II was heated at a heating rate of 4°C/minute to 180°C, and a hydrothermal reaction was performed for 48 hours. An obtained system was cooled at a cooling rate of 2°C/minute. A substance obtained from the hydrothermal reaction was centrifuged; and a resulting precipitate was washed alternately with water and ethanol five times, and finally dried at 90°C for 4 hours to obtain the hexahedral strontium titanate nanoparticles.

### Preparation Example 2

Preparation of octadecahedral strontium titanate nanoparticles was performed by the following steps.

Palmitic acid, ethylene glycol and 1,2-butanediol were mixed with water to obtain a composite morphology modifier, in which, a concentration of the palmitic acid was 0.2 wt%, a concentration of the ethylene glycol was 1 wt%, and a concentration of the 1,2-butanediol was 0.2 wt%. An aqueous titanium tetrachloride solution having a concentration of 0.003 g/mL was added, in a dropwise manner, to the composite morphology modifier, where a volume ratio of the composite morphology modifier to the aqueous titanium tetrachloride solution was 1 : 2. A resulting mixture was stirred for 30 minutes, and ice water was used for cooling during stirring to obtain a mixed solution I.

The mixed solution I, an aqueous sodium hydroxide solution having a concentration of 0.033 g/mL and an aqueous strontium chloride hexahydrate solution having a concentration of 0.01 g/mL were mixed at a volume ratio of 3 : 3 : 1. A resulting system was stirred for 30 minutes to obtain a mixed solution II having a pH of 14.2.

The mixed solution II was heated at a heating rate of 4°C/minute to 190°C, and a hydrothermal reaction was performed for 24 hours. An obtained system was cooled at a cooling rate of 2°C/minute. A substance obtained from the hydrothermal reaction was centrifuged; and a resulting precipitate was washed alternately with water and ethanol three times, and finally dried at 80°C for 6 hours to obtain the octadecahedral strontium titanate nanoparticles.

### Preparation Example 3

Preparation of irregular strontium titanate nanoparticles was performed by the following steps.

Palmitic acid, ethylene glycol and 1,2-butanediol were mixed with water to obtain a composite morphology modifier, in which, a concentration of the palmitic acid was 0.2 wt%, a concentration of the ethylene glycol was 1.2 wt%, and a concentration of the 1,2-butanediol was 1.6 wt%. An aqueous titanium tetrachloride solution having a concentration of 0.003 g/mL was added, in a dropwise manner, to the composite morphology modifier, where a volume ratio of the composite morphology modifier to the aqueous titanium tetrachloride solution was 1 : 2. A resulting mixture was stirred for 30 minutes, and ice water was used for cooling during stirring to obtain a mixed solution I.

The mixed solution I, an aqueous sodium hydroxide solution having a concentration of 0.033 g/mL and an aqueous strontium chloride hexahydrate solution having a concentration of 0.01 g/mL were mixed at a volume ratio of 3 : 3 : 1. A resulting system was stirred for 30 minutes to obtain a mixed solution II having a pH of 14.2.

The mixed solution II was heated at a heating rate of 4°C/minute to 180°C, and a hydrothermal reaction was performed for 72 hours. An obtained system was cooled at a cooling rate of 2°C/minute. A substance obtained from the hydrothermal reaction was centrifuged; and a resulting precipitate was washed alternately with water and ethanol five times, and finally dried at 80°C for 6 hours to obtain the irregular strontium titanate nanoparticles.

### Example 1

In the present example, raw materials for preparing a strontium titanate nano-micro material consisted of a matrix material and a dispersant.

In parts by mass, 72 parts of an acrylic resin (specifically an epoxy acrylic powder coating resin prepared in Example 7 of patent CN 115651473 A), 21 parts of a curing agent (specifically DDDA), 1 part of an antioxidant additive (specifically antioxidant 1076), 0.085 parts of a catalyst (specifically tetrabutylammonium bromide), 0.8 parts of a surface conditioner (specifically benzoin), 1.66 parts of a light stabilizer (specifically light stabilizer UV-405) and 3.45 parts of a strontium titanate nano-additive (specifically a mixture of octadecahedral strontium titanate, hexahedral strontium titanate and irregular strontium titanate at a mass ratio of 3 : 6 : 1) were mixed and then subjected to melt extrusion at 120°C. A resulting extrudate was cooled and then crushed to a particle size of 0.2-1 cm; and further crushing, grading and sieving were performed to obtain the matrix material having a particle size of 30-150 µm.

The dispersant was alumina; the dispersant had a particle size of 2-4 µm; and a mass of the dispersant was 0.1% of a mass of the matrix material.

The matrix material was mixed with the dispersant to obtain the strontium titanate nano-micro material.

The strontium titanate nano-micro material was evenly spread on a surface of a fiberglass cloth (specifically a woven fiberglass cloth having a grammage of 100 g/m²) by a powder spreading device, with a powder spreading speed being 4 m/minute; the fiberglass cloth, on the surface of which the strontium titanate nano-micro material was spread, was then loaded into a lamination device, and mold-closing and heating to 130°C were performed to melt the strontium titanate nano-micro material and then enable the strontium titanate nano-micro material in a molten state to infiltrate the fiberglass cloth. Curing was performed at a temperature of 160°C and a pressure of 10 MPa for 30 minutes, and after the curing was completed, cooling and demolding were conducted to obtain a flexible composite material. A content of the strontium titanate nano-micro material in the flexible composite material was 55 wt%, and the flexible composite material had a thickness of 0.15 mm.

### Example 2

A flexible composite material was prepared according to the process of Example 1, except that a fiberglass cloth used had a grammage of 200 g/m² and the flexible composite material had a thickness of 0.22 mm.

### Example 3

A flexible composite material was prepared according to the process of Example 1, except that a fiberglass cloth used had a grammage of 300 g/m² and the flexible composite material had a thickness of 0.31 mm.

### Example 4

A flexible composite material was prepared according to the process of Example 1, except that a content of a strontium titanate nano-micro material in the flexible composite material was 60 wt%.

### Comparative Example 1

A flexible composite material was prepared according to the process of Example 1, except that a strontium titanate nano-additive in a strontium titanate nano-micro material was omitted.

### Test Example 1

The strength of the flexible composite materials prepared in Examples 1-4 and Comparative Example 1 was tested according to a method prescribed in GB/T 13542.2-2021 (product strength ≥ 100 MPa). The water permeability of the flexible composite materials prepared in Examples 1-4 and Comparative Example 1 was tested according to a method prescribed in GB/T 21529-2008 (the water permeability of products ≤ 1.5 g/(m²·24 hours). Results thereof are shown in Table 1.

**Table 1 Performance test results of flexible composite materials prepared in Examples 1-4 and Comparative Example 1**

| Source of flexible composite material | Tensile strength (MPa) | | Water permeability (g/(m²·24 h)) |
|---|---|---|---|
| | Length direction | Width direction | |
| Example 1 | 210 | 180 | 1.30 |
| Example 2 | 240 | 214 | 1.20 |
| Example 3 | 270 | 231 | 1.10 |
| Example 4 | 188 | 168 | 1.25 |
| Comparative Example 1 | 209 | 182 | 1.29 |

As can be seen from Examples 1-3 in Table 1, the greater the grammage of the fiberglass cloth, the thicker the flexible composite material prepared, the greater the tensile strength thereof, and the higher the water permeability thereof. As can be seen from Examples 1 and 4, along with an increase in the content of the strontium titanate nano-micro material in the flexible composite material, the strength of the flexible composite material decreases, and the water permeability thereof decreases slightly. As can be seen from Example 1 and Comparative Example 1, omission of the strontium titanate nano-additive in the strontium titanate nano-micro material results in little change in the strength and the water permeability of the flexible composite material, indicating that an addition of the strontium titanate nano-micro material during preparation of the flexible composite material still allows the flexible composite material to maintain good mechanical properties and water resistance.

### Comparative Example 2

A flexible composite material was prepared according to a method of Example 1, except that a strontium titanate nano-micro material was replaced with a commercially available flexible photovoltaic material.

### Test Example 2

The elongation at break and the light transmittance of the flexible composite materials prepared in Example 1 and Comparative Example 2 were tested and compared with those of a traditional photovoltaic glass, wherein the elongation at break was tested according to a method prescribed in GB/T 13542.2-2021, and the light transmittance was tested according to a method prescribed in GB/T 2410-2008. Results are shown in Table 2. As can be seen from Table 2, although the light transmittance of the flexible composite material made of the strontium titanate nano-micro material is not as high as that of the traditional photovoltaic glass, the elongation at break and the light transmittance thereof are better than those of the flexible composite material prepared from the commercially available flexible photovoltaic material, and the elongation at break thereof is also better than that of the traditional photovoltaic glass.

**Table 2 Performance test results of flexible composite materials prepared in Example 1 and Comparative Example 2 and photovoltaic glass**

| Source of material | Elongation at break (%) | Light transmittance (%) |
|---|---|---|
| Example 1 | 16 | 90.0 |
| Comparative Example 2 | 15 | 86.5 |
| Traditional photovoltaic glass | 1.3 | 91.0 |

### Test Example 3

The weather resistance of the flexible composite materials prepared in Example 1 and Comparative Examples 1-2 was tested according to a method prescribed in GB/T 29848-2018. Results thereof are shown in Table 3. As can be seen from Table 3, in the flexible composite material prepared in Example 1 of the present disclosure, the strontium titanate nano-micro material is composited into a fiber cloth, and the strontium titanate nano-additive is added to the matrix material of the strontium titanate nano-micro material, thereby enabling the flexible composite material to have excellent weather resistance, for example, the UV resistance and the humidity-heat resistance thereof being superior to those of the flexible composite materials prepared in Comparative Example 1 and Comparative Example 2.

**Table 3 Performance test results of flexible composite materials prepared in Example 1 and Comparative Examples 1-2**

| Source of flexible composite material | UV resistance (Yellowness index Δb) | Humidity-heat resistance (Yellowness index Δb) |
|---|---|---|
| Example 1 | 0.5 | 0.3 |
| Comparative Example 1 | 1.0 | 1.2 |
| Comparative Example 2 | 1.8 | 2.1 |

As can be seen from the above test examples, the flexible composite material provided by the present disclosure has excellent weather resistance, and also has characteristics of a light weight, a high strength, a high light transmittance and good water resistance. In addition, the flexible composite material provided by the present disclosure has characteristics of high anti-fouling performance and being easy to clean, and generally, main dirt thereon could be removed by rain wash; and an expected outdoor service life thereof is 25 years or more.

The above descriptions are merely preferred embodiments of the present disclosure. It should be noted that a person of ordinary skill in the art may further make several improvements and modifications without departing from the principle of the present disclosure, but such improvements and modifications should be deemed as falling within the scope of the present disclosure.

## Claims

1. A flexible composite material, comprising a fiber cloth and a strontium titanate nano-micro material composited into the fiber cloth, wherein
raw materials for preparing the strontium titanate nano-micro material comprise a matrix material and a dispersant;
a mass of the dispersant is 0.05-0.2% of a mass of the matrix material; and
the matrix material is prepared from the following raw materials in parts by mass: 50-90 parts of a powdered resin; 10-50 parts of a curing agent; 0-20 parts of an antioxidant additive; 0.05-0.2 parts of a catalyst; 0-10 parts of a surface conditioner; 0-20 parts of a light stabilizer; and 0.05-5 parts of a strontium titanate nano-additive, wherein the strontium titanate nano-additive is a mixture of octadecahedral strontium titanate, hexahedral strontium titanate and irregular strontium titanate at a mass ratio of 3-4 : 4-6 : 1-2.

2. The flexible composite material of claim 1, wherein the fiber cloth is a fiberglass cloth.

3. The flexible composite material of claim 2, wherein the fiber cloth has a grammage of 100-400 g/m².

4. The flexible composite material of claim 1, wherein the strontium titanate nano-additive has a particle size of 50-300 nm.

5. The flexible composite material of claim 4, wherein the octadecahedral strontium titanate has a particle size of 100-200 nm; the hexahedral strontium titanate has a particle size of 100-200 nm; and the irregular strontium titanate has a particle size of 50-100 nm.

6. The flexible composite material of claim 1, wherein the powdered resin comprises at least one selected from the group consisting of an acrylic resin, a polyurethane resin, and a polyester resin.

7. The flexible composite material of claim 6, wherein the acrylic resin is an epoxy acrylic resin.

8. The flexible composite material of claim 1, wherein the curing agent comprises at least one selected from the group consisting of dodecanedioic acid, triglycidyl isocyanurate, and an isocyanate.

9. The flexible composite material of claim 1, wherein the antioxidant additive comprises at least one selected from the group consisting of stearyl beta-(3,5-di-tert-butyl-4-hydroxyphenyl)propionate, a benzofuranone derivative, and a thioester antioxidant.

10. The flexible composite material of claim 1, wherein the catalyst comprises one selected from the group consisting of tetrabutylammonium bromide, dibutyltin dilaurate, and 2-propylimidazole.

11. The flexible composite material of claim 1, wherein the surface conditioner comprises benzoin.

12. The flexible composite material of claim 1, wherein the light stabilizer comprises one selected from the group consisting of a triazine light stabilizer, and a hindered amine light stabilizer.

13. The flexible composite material of claim 1, wherein the matrix material has a particle size of 30-150 µm.

14. The flexible composite material of claim 1, wherein the dispersant has a particle size of 2-8 µm.

15. The flexible composite material of claim 1, wherein the dispersant comprises at least one selected from the group consisting of alumina, fumed silica, and glass microbeads.

16. The flexible composite material of any one of claims 1-15, wherein a content of the strontium titanate nano-micro material in the flexible composite material is in a range of 50-80 wt%.

17. A method for preparing the flexible composite material of any one of claims 1-16, comprising the following steps:
impregnating the fiber cloth using the strontium titanate nano-micro material in a molten state, and then curing to obtain the flexible composite material.

18. The method of claim 17, wherein the impregnating the fiber cloth using the strontium titanate nano-micro material in the molten state comprises:
laying the strontium titanate nano-micro material on a surface of the fiber cloth, and heating a resulting system by a lamination device or a rolling device such that the strontium titanate nano-micro material is melted and then impregnates the fiber cloth.

19. The method of claim 17, wherein the impregnating the fiber cloth using the strontium titanate nano-micro material in the molten state comprises:
extruding the strontium titanate nano-micro material to obtain a resin film, laminating the resin film onto a surface of the fiber cloth, and heating an obtained system by a lamination device or a rolling device such that the resin film is melted and then impregnates the fiber cloth.

20. The method of any one of claims 17-19, wherein the curing is performed at a temperature of 130-200°C and a pressure of 1-20 MPa for 10-90 minutes.

21. Use of the flexible composite material of any one of claims 1-16 or the flexible composite material prepared by the method of any one of claims 17-20 as an encapsulation material for a photovoltaic module.

22. The use of claim 21, wherein the encapsulation material is an encapsulation material for a front sheet or a backsheet of the photovoltaic module.
